Europäisches Patentamt

European Patent Office

Office européen des brevets

(11) Numéro de publication: **0 352 191**
**A1**

## (12) DEMANDE DE BREVET EUROPEEN

(21) Numéro de dépôt: **89402062.7**

(22) Date de dépôt: **20.07.89**

(51) Int. Cl.⁵: **H 02 G 3/04**

(30) Priorité: **20.07.88 FR 8809817**

(43) Date de publication de la demande:
**24.01.90 Bulletin 90/04**

(84) Etats contractants désignés:
**AT BE CH DE ES FR GB GR IT LI LU NL SE**

(71) Demandeur: **LE METAL DEPLOYE, Société Anonyme dite:**
**383, avenue du Général de Gaulle**
**F-92140 Clamart (FR)**

(72) Inventeur: **Bernard, Gérard**
**12, rue André Theuriet**
**F-92340 - Bourg La Reine (FR)**

**Durin, Michel**
**3, rue Jean Moulin**
**F-78210 - Saint-Cyr L'Ecole (FR)**

(74) Mandataire: **Nony, Michel et al**
**Cabinet Nony 29, rue Cambacérès**
**F-75008 Paris (FR)**

(54) **Chemin de câbles réalisé avec un treillis de fils métalliques soudés.**

(57) L'invention est relative à un chemin de câbles en treillis de fils métalliques soudés, du type comportant des éléments transversaux en forme de U (1) et des éléments longitudinaux (2,3,4) soudés sur les parties horizontales (1a) et verticales (1b) des fils transversaux.

Les fils longitudinaux de rive (4) sont soudés au voisinage des extrémités des fils transversaux (1b) du côté opposé où sont soudés les autres fils longitudinaux (3) des parties verticales (1b) des fils transversaux (1) et que ces fils longitudinaux de rive (4) sont repliés (5) au voisinage des fils transversaux (1b) de telle sorte qu'ils contournent les fils transversaux (1b) et que la quasi-totalité de leur longueur soit située dans le même plan vertical que les autres fils longitudinaux (3) soudés sur les parties verticales (1b) des fils transversaux (1).

EP 0 352 191 A1

**Description**

## Chemin de câbles réalisé avec un treillis de fils métalliques soudés

La présente invention est relative à un chemin de câbles perfectionné réalisé avec un treillis métallique soudé.

Il est déjà connu de réaliser des chemins de câbles à l'aide de treillis métalliques soudés qui sont constitués par deux nappes de fils d'acier disposées à angle droit et soudées l'une contre l'autre aux points de croisement de chacun des fils.

De tels chemins de câbles comportent des fils transversaux en forme de U et des fils longitudinaux soudés sur la partie horizontale et les parties verticales des fils transversaux, soit à l'intérieur, soit à l'extérieur de ces derniers.

Ces chemins de câbles comportent des fils de rive soudés sur un des côtés des extrémités des parties verticales des fils transversaux.

Il en résulte que, quelles que soient les précautions que l'on prend pour le découpage des extrémités des fils transversaux, ces dernières présentent des arêtes ou des aspérités qui peuvent endommager les gaines plastiques des câbles électriques qui sont placées dans les chemins de câbles.

La présente invention a pour objet un nouveau chemin de câbles en treillis soudés qui est d'une fabrication simple et économique et qui évite les inconvénients précités tout en conservant au chemin de câbles ses possibilités de déviation en restant dans un même plan horizontal ainsi que la faculté de pouvoir raccorder bout à bout les différentes sections de chemins de câbles a l'aide d'éclisses conventionnelles qui se situent entre les fils de rive et les fils longitudinaux des éléments transversaux qui leur sont voisins.

La présente invention a pour objet un chemin de câbles en treillis de fils métalliques soudés, du type comportant des éléments transversaux en forme de U et des éléments longitudinaux soudés sur les parties horizontales et verticales des fils transversaux, caractérisé par le fait que les fils longitudinaux de rives sont soudés au voisinage des extrémités des fils transversaux du côté opposé où sont soudés les autres fils longitudinaux des parties verticales des fils transversaux, et que ces fils longitudinaux de rive sont repliés au voisinage des fils tranversaux de telle sorte qu'ils contournent les fils transversaux et que la quasi totalité de leur longueur soit située dans le même plan vertical que les autres fils longitudinaux soudés sur les parties verticales des fils transversaux.

On comprend que, de cette manière, grâce à l'invention, les fils longitudinaux de rive entourent les extrémités des fils transversaux de telle façon que les câbles qui sont posés dans le chemin de câbles selon l'invention ne peuvent venir au contact des extrémités coupantes des fils transversaux et ne peuvent ainsi être endommagés.

Conformément à un mode de réalisation préféré de l'invention, la génératrice supérieure du fil de rive qui contourne les extrémités des fils transversaux est située légèrement au-dessus desdites extrémités de manière à éviter que d'éventuelles bavures résultant des sectionnements des fils transversaux ne risquent d'endommager les câbles.

Conformément à un mode de réalisation préféré de l'invention, les fils longitudinaux sont soudés à l'extérieur des fils transversaux de telle sorte que, conformément à l'invention, les fils longitudinaux de rive sont soudés à l'intérieur des fils transversaux au voisinage de l'extrémité de ces derniers.

Dans le but de mieux faire comprendre l'invention on va en décrire maintenant à titre d'illustration et sans aucun caractère limitatif un mode de réalisation représenté sur le dessin annexé.

Sur ce dessin :
- la figure 1 est une vue de dessus d'un chemin de câbles selon l'invention,
- la figure 2 est une coupe selon II-II de la figure 1,
- la figure 3 est une vue en perspective d'une partie de la figure 1 selon la flèche III, et
- la figure 4 est une vue en coupe selon IV-IV de la figure 3.

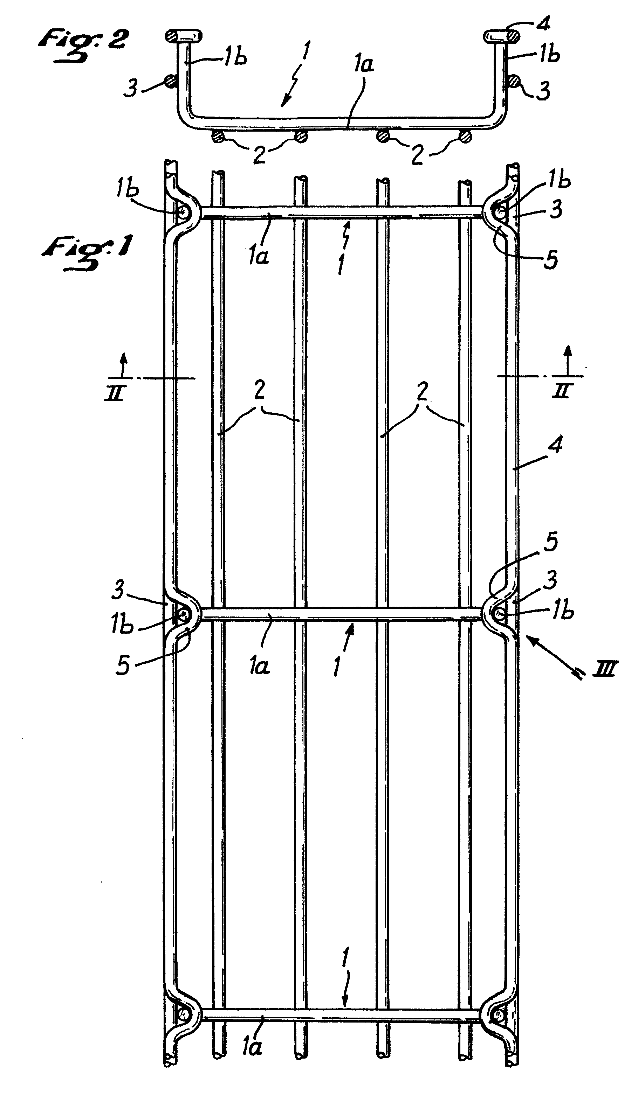

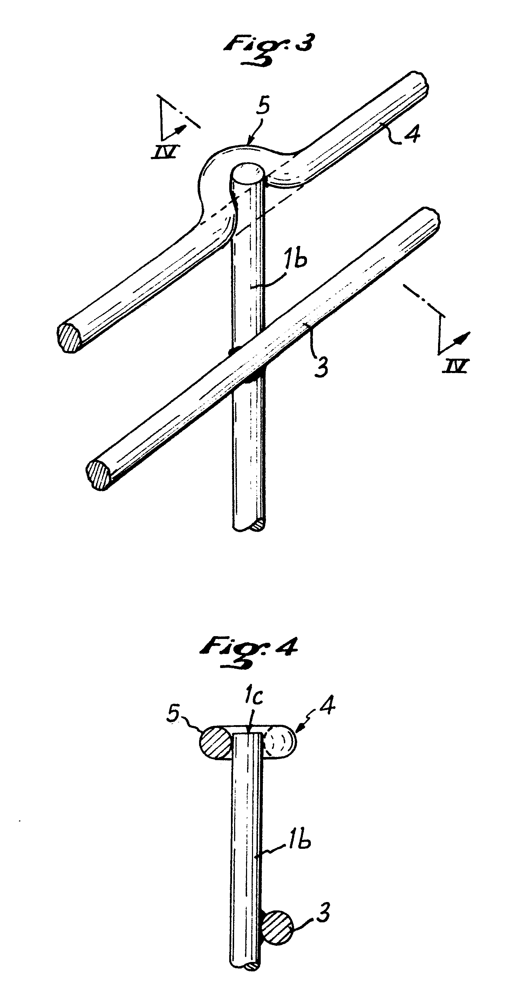

On voit sur les figures 1 et 2 les fils transversaux 1 qui comportent une partie horizontale la sur laquelle sont soudés des fils longitudinaux 2, et des parties verticales 1b qui supportent des fils longitudinaux 3 disposés de manière conventionnelle du même côté que les fils longitudinaux 2.

Conformément à l'invention, les fils longitudinaux de rive 4 qui présentent des déformations 5 sont soudés au niveau de ces déformations sur les extrémités des parties verticales 1b des fils transversaux 1.

De cette manière, les fils longitudinaux de rive 4 qui sont assujettis aux fils transversaux 1 par une soudure située du côté opposé aux soudures qui réunissent les fils longitudinaux 2 et 3 aux fils transversaux 1, contournent les extrémités des fils transversaux 1b de manière que la quasi-totalité de la longueur utile des fils longitudinaux de rive 4 soit située dans le même plan vertical que celui contenant les autres fils longitudinaux 3 qul sont disposés sur les parties verticales 1b des fils transversaux, comme on le voit clairement sur le dessin.

On voit clairement sur la figure 3 qui est une vue en perspective, les positions relatives du fil longitudinal 3 et du fil longitudinal de rive 4 par rapport à la partie verticale d'un fil transversal 1b.

Comme on peut le voir sur la figure 4 qui représente un mode de réalisation préféré de l'invention, les fils longitudinaux de rive 4 sont soudés sur les fils transversaux de manière à ce que la face terminale 1c des fils transversaux soit disposée en dessous de la génératrice supérieure des fils longitudinaux de rive 4 de manière à éviter tout risque que des arêtes ou des bavures qui pourraient exister à l'extrémité des fils transversaux ne risquent d'endommager les câbles disposés sur le chemin de câbles selon l'invention.

Comme on le comprend aisément, le chemin de câbles selon l'invention conserve les avantages des chemins de câbles connus en permettant notamment par sectionnement des fils longitudinaux se trouvant sur la partie horizontale et sur une des parties verticales de pouvoir replier le chemin de câbles pour lui faire suivre des courbes en restant dans le même plan horizontal.

De même, le chemin de câbles selon l'invention permet d'utiliser des éclisses qui viennent s'engager entre les fils longitudinaux 3 et 4 pour réunir bout à bout deux sections contigues de chemin de câbles.

Enfin, les chemins de câbles selon l'invention peuvent être facilement empilés les uns dans les autres, ce qui est intéressant pour diminuer le coût de leur transport.

Il est bien entendu que les modes de réalisation qui ont été décrits ci-dessus ne présentent aucun caractère limitatif et qu'ils pourront recevoir toutes modifications désirables sans sortir pour cela du cadre de l'invention.

En particulier, il est clair que les fils longitudinaux 2 et 3 peuvent être soudés à l'intérieur des fils transversaux, auquel cas, les fils de rive 4 sont soudés sur la génératrice extérieure des parties verticales 1b.

De même, on comprend que l'on peut disposer sur les parties verticales plusieurs fils longitudinaux 3 si cela était nécessaire pour renforcer la structure du chemin de câbles.

Par ailleurs, on comprend également que les fils longitudinaux 2 ou certains d'entre eux peuvent être soudés sur les fils transversaux du côté opposé aux fils longitudinaux 3 disposés sur les parties verticales.

Enfin, il va de soi que bien que l'invention ait été décrite en parlant de la partie horizontale et des parties verticales des fils transversaux, les chemins de câbles objet du présent brevet peuvent être placés en vue de leur utilisation dans n'importe quelles positions.

**Revendications**

1. Chemin de câbles en treillis de fils métalliques soudés, du type comportant des éléments transversaux en forme de U (1) et des éléments longitudinaux (2,3,4) soudés sur les parties horizontales (1a) et verticales (1b) des fils transversaux, caractérisé par le fait que les fils longitudinaux de rive (4) sont soudés au voisinage des extrémités des fils transversaux (1b) du côté opposé où sont soudés les autres fils longitudinaux (3) des parties verticales (1b) des fils transversaux (1) et que ces fils longitudinaux de rive (4) sont repliés (5) au voisinage des fils transversaux (1b) de telle sorte qu'ils contournent les fils transversaux (1b) et que la quasi-totalité de leur longueur soit située dans le même plan vertical que les autres fils longitudinaux (3) soudés sur les parties verticales (1b) des fils transversaux (1).

2. Chemin de câbles selon la revendication 1, caractérisé par le fait que la génératrice supérieure du fil de rive (4) qui contourne les extrémités des fils transversaux (1b) est située légèrement au dessus desdites extrémités (1c) de manière à éviter que d'éventuelles bavures résultant des sectionnements des fils transversaux risquent d'endommager les câbles.

3. Chemin de câbles selon l'une des revendications précédentes, caractérisé par le fait que les fils longitudinaux (2,3) sont soudés à l'extérieur des fils transversaux (1) et que les fils longitudinaux de rive (4) sont soudés à l'intérieur des fils transversaux (1) au voisinage de l'extrémité (1c) de ces derniers.

Fig. 2

Fig. 1

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-191667 (KRIEG ET ZIVY) <br> * abstract; figure 1 * | 1 | H02G3/04 |

TECHNICAL FIELDS
SEARCHED (Int. Cl.5 )

H02G

The present search report has been drawn up for all claims

| Place of search | Date of completion of the search | Examiner |
|---|---|---|
| THE HAGUE | 09 OCTOBER 1989 | RIEUTORT A.S. |

EPO FORM 1503 03.82 (P0401)